# EUROPÄISCHE PATENTSCHRIFT

(11) **EP 3 028 815 B1**
(45) Veröffentlichungstag und Bekanntmachung des Hinweises auf die Patenterteilung: **22.06.2022**
(21) Anmeldenummer: 15183811.7
(22) Anmeldetag: 04.09.2015
(51) Int. Cl.: B25B 23/14, B25B 21/00, B25B 21/02

(54) **HANDWERKZEUGMASCHINE MIT EINER DREHMOMENTKUPPLUNG**
HAND TOOL WITH A TORQUE COUPLING
MACHINE-OUTIL PORTATIVE DOTEE D'UN EMBRAYAGE A COUPLE

(30) Priorität: 04.12.2014 DE 102014224931
(43) Veröffentlichungstag der Anmeldung: 08.06.2016
(73) Patentinhaber: Robert Bosch GmbH, 70442 Stuttgart (DE)
(72) Erfinder: Brennenstuhl, Jens, 73095 Albershausen (DE); Roehm, Heiko, 70176 Stuttgart (DE)

(56) Entgegenhaltungen:
- EP-A2- 2 216 114
- WO-A1-2007/135107
- WO-A1-2012/084428
- DE-A1-102009 054 925
- DE-A1-102009 054 931

## Beschreibung

### Stand der Technik

Die vorliegende Erfindung betrifft eine Handwerkzeugmaschine gemäß Oberbegriff des Anspruchs 1. Eine solche ist bekannt aus WO 2007/135107A1.

Aus der DE 10 2009 054 925 A1 ist eine Bohrmaschine mit einer Werkzeugaufnahme, die über eine mit einer Drehmomentkupplung versehene Abtriebsspindel mit einem Antriebsmotor gekoppelt ist, bekannt. Die Drehmomentkupplung verfügt über einen ersten Einstellring, der über eine Einstellmutter mit wenigstens einem eine Vorspannkraft auf ein Druckblech aufbringenden Spannelement und einem Federhalter zusammenwirkt, um innerhalb vorgegebener Grenzen eine arbeitsspezifische Drehmomentbegrenzung über den ersten Einstellring vorzugeben und somit die Drehmomentkupplung in einem zugeordneten Schraubmodus zu aktivieren, oder um bei weiterer Erhöhung der Vorspannkraft das Druckblech mittelbar über den Federhalter axial zu blockieren und somit einen Bohrmodus vorzugeben, in dem die Drehmomentkupplung deaktiviert ist. Darüber hinaus ist mittels eines zweiten Einstellrings und einem mit diesem zusammenwirkenden Kurvenring eine axiale Verschiebbarkeit der Abtriebsspindel bei gleichzeitiger Deaktivierung der Drehmomentkupplung durch eine unmittelbare Blockierung des Druckblechs durch den Kurvenring einstellbar, wobei bei axial beweglicher Abtriebsspindel ein sogenannter Schlagbohrmodus eingestellt ist und bei axial festgelegter Abtriebsspindel in Abhängigkeit von der Einstellung des ersten Einstellrings der Bohr- oder Schraubmodus eingestellt ist.

Nachteilig am Stand der Technik ist, dass der Bohrmodus aufgrund der lediglich mittelbaren axialen Blockierung des Druckblechs über den Federhalter nur bedingt zuverlässig einstellbar ist und bei sehr spezifischen Einsatzbedingungen somit auch im Bohrmodus ein sogenanntes Überrasten der Drehmomentkupplung möglich ist.

### Offenbarung der Erfindung

Eine Aufgabe der Erfindung ist es daher, eine Handwerkzeugmaschine, insbesondere einen Bohrschrauber, einen Schrauber oder einen Schlagbohrschrauber bereitzustellen, bei der ein Überrasten der Drehmomentkupplung in einem Bohrmodus zuverlässig verhindert werden kann und wobei eine axial kompakte Bauweise und geringe Betätigungskräfte zum Aktiveren oder Deaktivieren der Drehmomentkupplung gegeben sein sollen.

Dieses Problem wird durch eine Handwerkzeugmaschine gemäß Anspruch 1 gelöst.

Bevorzugt ist hierbei das Übertragungselement verdrehgesichert in der Handwerkzeugmaschine aufgenommen.

Die Erfindung ermöglicht somit die Bereitstellung einer Handwerkzeugmaschine mit einer Drehmomentkupplung, insbesondere eines Schraubers oder Bohrschraubers, bei der eine zuverlässige Aktivierung bzw. Deaktivierung der Drehmomentkupplung mit vergleichsweise geringen Aktivierungs- bzw. Deaktivierungskräften und -wegen erreicht wird. Hierbei ist eine jeweilige Momentenhöhe der Drehmomentkupplung bevorzugt zur arbeitsspezifischen Drehmomentbegrenzung über ein zugeordnetes Bedienelement innerhalb vorgegebener Grenzen einstellbar. Darüber hinaus kann die Handwerkzeugmaschine auf einfache Art und Weise in zwei unterschiedlichen Betriebsmodi verwendet werden, wobei z.B. in einem Schraubmodus die Drehmomentkupplung aktiviert ist und in einem Bohrmodus die Drehmomentkupplung deaktiviert ist.

Gemäß einer Ausführungsform ist das Blockierelement dazu ausgebildet, in mindestens einer dritten Betriebsstellung die axiale Verschiebbarkeit des Übertragungselements zur Deaktivierung der Drehmomentkupplung zumindest zu begrenzen, wobei die Abtriebsspindel in der dritten Betriebsstellung des Blockierelements relativ zum Getriebegehäuse axial in Richtung der Längsmittelachse beweglich ist.

Somit kann die Handwerkzeugmaschine sicher und zuverlässig in einem weiteren Betriebsmodus verwendet werden, in dem die Drehmomentkupplung ebenfalls deaktiviert ist, z.B. in einem Schlagbohrmodus.

Bevorzugt ist die erste Betriebsstellung einem Schraubmodus zugeordnet, die zweite Betriebsstellung ist einem Bohrmodus zugeordnet und die dritte Betriebsstellung ist einem Schlagbohrmodus zugeordnet.

Hierdurch ist eine Multifunktionalität der Drehmomentkupplung gegeben.

Gemäß einer Ausführungsform ist das Blockierelement ein um die Längsmittelachse verdrehbarer Blockierring.

Somit kann ein konstruktiv einfacher Aufbau und leichtgängiger Betrieb des Blockierelements ermöglicht werden.

Bevorzugt ist der Blockierring verdrehgesichert in einem zugeordneten Verstellelement aufgenommen.

Hierdurch ist eine zuverlässige mechanische Kopplung zwischen dem Verstellelement und dem Blockierring gewährleistet.

Vorzugsweise ist das Getriebe nach Art eines Planetengetriebes ausgebildet, wobei an einem Hohlrad einer der Drehmomentkupplung zugewandten Getriebestufe des Planetengetriebes mindestens ein Rastnocken ausgebildet ist.

Infolge der integralen Ausbildung der Rastnocken am Hohlrad der der Drehmomentkupplung zugewandten Getriebestufe lässt sich der axiale Einbauraum der Drehmomentkupplung verringern.

Bevorzugt ist zwischen dem Hohlrad und einer dem Hohlrad zugewandten Seite des Übertragungselements mindestens ein Rastkörper angeordnet und das Übertragungselement ist mittels mindestens einer Druckfeder gegen das Hohlrad axial vorgespannt, wobei die mindestens eine Druckfeder an einer vom Getriebe abgewandten Seite des Übertragungselements anliegt und sich an einem zugeordneten Federhalter abstützt.

Hierdurch ist ein konstruktiv vergleichsweise einfacher und zugleich robuster bzw. weitgehend verschleißarmer Aufbau der Drehmomentkupplung realisierbar.

Bevorzugt ist eine axiale Position des Federhalters mittels eines um die Längsmittelachse der Abtriebsspindel verdrehbaren Einstellrings zur Anpassung einer axialen Vorspannung der mindestens einen Druckfeder einstellbar.

Hierdurch lässt sich das von der Drehmomentkupplung maximal übertragbare Drehmoment, ab dem die Drehmomentkupplung im Betrieb überrastet, einstellen.

Erfindungsgemäß ist stirnseitig an dem Blockierelement mindestens ein Abstützelement ausgebildet, das in Richtung des Übertragungselements weist.

Durch das bevorzugt als Erhebung ausgeführte Abstützelement wird die axiale Hubbewegung des Rastkörpers bzw. des Übertragungselements bei deaktivierter Drehmomentkupplung begrenzt.

Nach Maßgabe einer vorteilhaften Weiterbildung weist das Übertragungselement mindestens eine Aussparung auf.

Hierdurch kann das Abstützelement im Kupplungsbetrieb der Drehmomentkupplung in eine entsprechende Aussparung eintauchen, wodurch eine Drehmomentbegrenzung durch die Drehmomentkupplung möglich ist.

Gemäß einer weiteren Ausgestaltung weist das Blockierelement mindestens einen auswärts gerichteten Fortsatz auf.

Hierdurch wird das Verdrehen des Blockierrings mittels des benutzerseitig zu betätigenden, außenliegenden und ringförmigen Verstellelements ermöglicht. Darüber hinaus verfügt das Blockierelement bevorzugt über mindestens eine radiale, einwärts gerichtete Aussparung, die der Montage des Blockierelements am Getriebegehäuse dient.

Erfindungsgemäß weist das Getriebegehäuse zur Aufnahme des Blockierelements an seinem Außenumfang zumindest abschnittsweise eine Nut mit mindestens einer Abstützrippe auf.

Hierdurch ist eine Aufnahme des Blockierelements gegeben, wobei die Abstützrippe zur direkten Überleitung der auftretenden Axialkräfte in das Getriebegehäuse dient. Alternativ kann eine Abstützgeometrie auch durch zusätzliche Bauteile realisiert werden, die eine Bewegung des Blockierelements in Richtung der Längsmittelachse der Abtriebsspindel verhindern.

Vorzugsweise begrenzt das Abstützelement des Blockierelements bei deaktivierter Drehmomentkupplung einen Axialhub des Rastkörpers und des Übertragungselements in eine vom Getriebe abgewandte Richtung derart, dass der Rastkörper zur Deaktivierung der Drehmomentkupplung zumindest bereichsweise an dem Rastnocken des Hohlrads anliegt.

Infolge dieser Ausgestaltung kann die Handwerkzeugmaschine bei deaktivierter Drehmomentkupplung das maximal vom Antriebsmotor erzeugbare Drehmoment auf das Einsatzwerkzeug, wie z.B. einen Bohrer oder dergleichen, übertragen. Gemäß einer vorteilhaften Ausgestaltung taucht bei aktivierter Drehmomentkupplung das Abstützelement am Blockierelement in die Aussparung des Übertragungselements zumindest bereichsweise derart ein, dass der Rastkörper den Rastnocken beim Überschreiten eines voreingestellten Drehmoments überläuft.

Hierdurch lässt sich bei aktivierter Drehmomentkupplung, z.B. beim Schrauben, das vom Antriebsmotor erzeugte und auf das Einsatzwerkzeug übertragene Drehmoment auf einen vorgegebenen Wert begrenzen, um beispielsweise ein definiertes Anzugsmoment einer Schraube zu gewährleisten.

Nach Maßgabe einer Weiterbildung ist das Blockierelement bei aktivierter Drehmomentkupplung direkt oder indirekt arretierbar.

Hierdurch lassen sich unkontrollierte Umschaltvorgänge zwischen den Betriebsmodi der Handwerkzeugmaschine zuverlässig verhindern.

### Kurze Beschreibung der Zeichnungen

Die Erfindung ist anhand von in den Zeichnungen dargestellten Ausführungsbeispielen in der nachfolgenden Beschreibung näher erläutert. In den Zeichnungen weisen dieselben konstruktiven Elemente mit identischen Funktionalitäten jeweils die gleichen Bezugsziffern auf und werden in der Regel nur einmal beschrieben. Es zeigen:
- Fig. 1: einen Längsschnitt durch eine Handwerkzeugmaschine mit einer Drehmomentkupplung gemäß der vorliegenden Erfindung, die über einen Schraubmodus und einen Bohrmodus verfügt,
- Fig. 2: eine perspektivische Ansicht des Getriebes von Fig. 1 mit der Drehmomentkupplung von Fig. 1 gemäß einer alternativen Ausführungsform,
- Fig. 3: eine Draufsicht eines Längsschnitts des Getriebes mit der Drehmomentkupplung von Fig. 2,
- Fig. 4: eine perspektivische Ansicht eines exemplarisch als Blockierring ausgebildeten, erfindungsgemäßen Blockierelements der Drehmomentkupplung von Fig. 1 bis Fig. 3,
- Fig. 5: eine Draufsicht auf ein Übertragungselement der Drehmomentkupplung von Fig. 1 bis Fig. 3,
- Fig. 6: eine Seitenansicht eines erfindungsgemäßen Getriebegehäuses der Handwerkzeugmaschine von Fig. 1, und
- Fig. 7: eine perspektivische Ansicht des Getriebes von Fig. 1 mit der Drehmomentkupplung von Fig. 1 und einem transversal zur Längsmittelachse einer Abtriebsspindel verschiebbaren Blockierelement gemäß einer weiteren alternativen Ausführungsform.

### Beschreibung der Ausführungsbeispiele

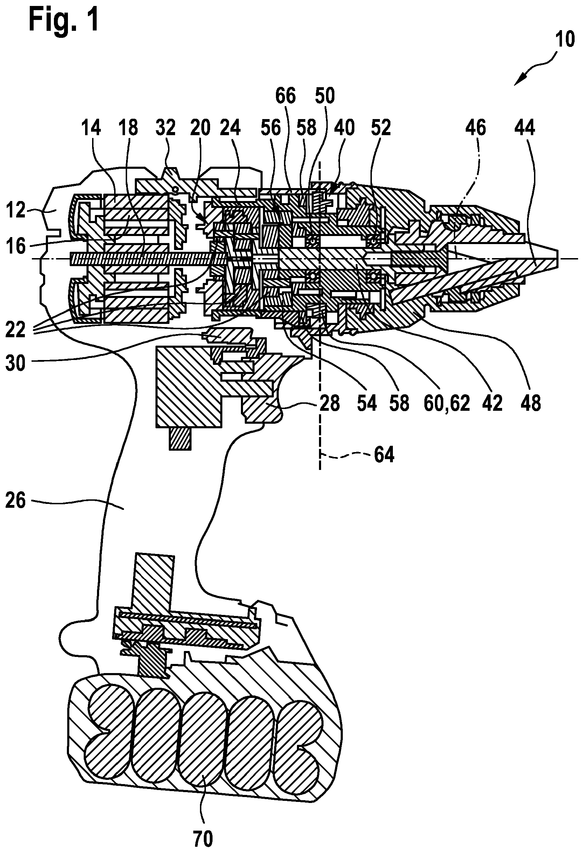

Fig. 1 zeigt eine Handwerkzeugmaschine 10 mit einer Drehmomentkupplung 40 gemäß der vorliegenden Erfindung, die exemplarisch als Akku-Bohrschrauber ausgebildet ist. Hierbei ist die Handwerkzeugmaschine 10 exemplarisch zur netzunabhängigen Stromversorgung mechanisch und elektrisch mit einem Akkupack 70 verbindbar. Es wird jedoch darauf hingewiesen, dass die vorliegende Erfindung nicht auf Akku-Bohrschrauber beschränkt ist, sondern vielmehr bei unterschiedlichen Handwerkzeugmaschinen, wie z.B. einem Schrauber, einem Schlagschrauber oder einer Schlagbohrmaschine, bei denen die erfindungsgemäße Drehmomentkupplung 40 verwendet werden kann, Anwendung finden kann, unabhängig davon, ob die Handwerkzeugmaschine elektrisch, d.h. netzabhängig oder netzunabhängig mit dem Akkupack 70, oder nicht-elektrisch betreibbar ist.

Die Handwerkzeugmaschine 10 weist ein Werkzeuggehäuse 12 auf, in dem illustrativ ein elektrischer Antriebsmotor 14 angeordnet ist, dessen Stator 16 mittels einer zugeordneten Antriebswelle 18 ein Getriebe 20 antreibt, das bevorzugt als ein mehrstufiges Planetengetriebe 22 ausgeführt und in einem separaten, verdrehgesichert im Werkzeuggehäuse 12 angeordneten Getriebegehäuse 24 angeordnet ist. Alternativ hierzu kann auch auf eine Verwendung des separaten Getriebegehäuses 24 verzichtet werden.

Der elektrische Antriebsmotor 14 kann ein beliebiger Motortyp sein, z.B. ein elektronisch kommutierter Motor oder ein Gleichstrommotor. Vorzugsweise ist der Antriebsmotor 14 derart elektronisch steuer- bzw. regelbar, dass sowohl ein Drehrichtungswechsel, als auch Vorgaben hinsichtlich einer gewünschten Drehgeschwindigkeit einstellbar sind.

Das Werkzeuggehäuse 12 verfügt ferner über einen Handgriff 26 mit einem Handschalter 28 zum Ein- Ausschalten sowie zur bevorzugt stufenlosen Drehzahlregelung des Antriebsmotors 14. Darüber hinaus ist an dem Handgriff 26 ein Drehrichtungsumschalter 30 zum Wechsel der Drehrichtung des Antriebmotors 14 bzw. der Antriebswelle 18 vorgesehen. Ferner ist oberseitig am Werkzeuggehäuse 12 ein Gangumschalter 32 zur Umschaltung zwischen den einzelnen Gängen des Planetengetriebes 22 positioniert.

Das Planetengetriebe 22 treibt bevorzugt über eine Drehmomentkupplung 40 eine Abtriebsspindel 42 an, an deren freiem axialen Ende eine Werkzeugaufnahme 44 zur Aufnahme eines nicht dargestellten Einsatzwerkzeugs, wie z.B. eines Bohrers oder eines Schrauberbits, angeordnet ist. Das Drehmoment, ab dem die Drehmomentkupplung überrastet, ist vorzugsweise mittels eines um eine Längsmittelachse 46 vom Benutzer bevorzugt rastend verdrehbaren Einstellrings 48 variierbar. Die Abtriebsspindel 42 ist in einem ersten und einem zweiten Lager 50, 52 drehbar aufgenommen, wobei das zur Werkzeugaufnahme 44 gewandte Lager 52 in dem in Fig. 1 illustrierten Fall des Bohrschraubers axial unbeweglich ist.

Die Drehmomentkupplung 40 ist mit einem Hohlrad 54 einer letzten, der Drehmomentkupplung 40 zugewandten Getriebestufe 56 des Planetengetriebes 22 gekoppelt. Die Drehmomentkupplung 40 umfasst bevorzugt ein in Richtung der Längsmittelachse 46 axial verschiebbares Übertragungselement 58 sowie ein Blockierelement 60. Das Übertragungselement 58 ist bervorzugt verdrehgesichert in der Handwerkzeugmaschine 10, vorzugsweise verdrehgesichert am Getriebegehäuse 24, angeordnet.

Das Blockierelement 60 ist bevorzugt in einer quer zur Längsmittelachse 46 verlaufenden Ebene 64 beweglich, während das Übertragungselement 58 parallel zu der Längsmittelachse 46 verschiebbar ist. Gemäß einer Ausführungsform ist das Blockierelement 60 als Blockierring 62 ausgeführt. Dieser Blockierring 62 ist vorzugsweise verdrehgesichert in einem zugeordneten Verstellelement 66 aufgenommen, das benutzerseitig ebenfalls durch Verdrehen um die Längsmittelachse 46 betätigbar ist.

Der Blockierring 62 gibt in einer ersten Betriebsstellung die axiale Verschiebbarkeit des Übertragungselements 58 zur Aktivierung der Drehmomentkupplung 40 frei, während der Blockierring 62 in seiner zweiten Betriebsstellung die axiale Beweglichkeit des Übertragungselements 58 zur Deaktivierung der Drehmomentkupplung 40 zumindest begrenzt und vorzugsweise vollständig blockiert. Die erste Betriebsstellung ist bevorzugt einem Schraubmodus (Drehmomentkupplung aktiv bzw. aktiviert) der Handwerkzeugmaschine 10 zugeordnet und in der zweiten Betriebsstellung befindet sich die Handwerkzeugmaschine 10 vorzugsweise in einem Bohrmodus (Drehmomentkupplung inaktiv bzw. deaktiviert). In der in Fig. 1 illustrierten Position befindet sich der Blockierring 62 in seiner ersten Betriebsstellung, d.h. die Drehmomentkupplung 40 ist aktiv und die Handwerkzeugmaschine 10 kann im Schraubmodus betrieben werden, wobei die axiale Verschiebbarkeit des Übertragungselements 58 freigegeben ist.

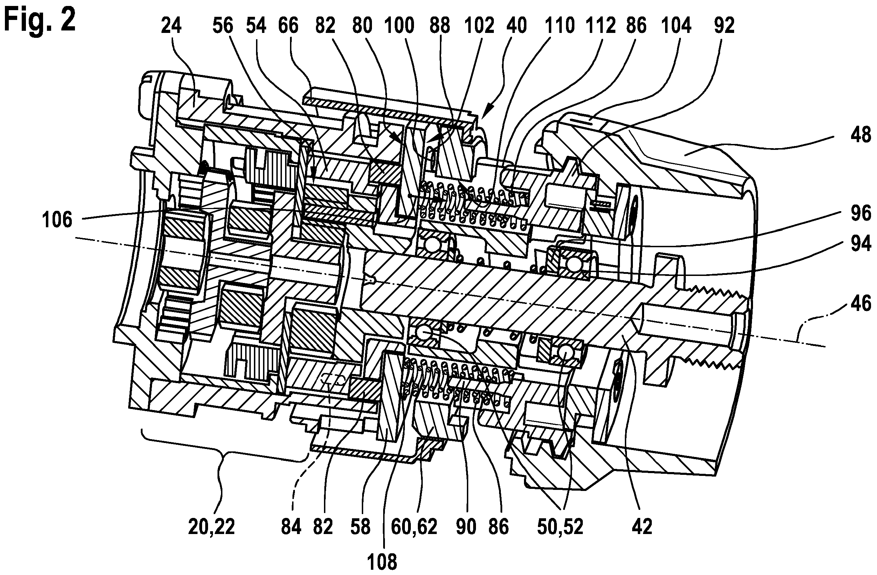

Fig. 2 zeigt das Getriebe 20 von Fig. 1 mit der gemäß einer alternativen Ausführungsform ausgebildeten Drehmomentkupplung 40 von Fig. 1. Diese ist wie bei Fig. 1 beschrieben mit dem Hohlrad 54 der letzten Getriebestufe 56 des in dem Getriebegehäuse 24 untergebrachten Planetengetriebes 22 gekoppelt. Zwischen dem Hohlrad 54 und einer diesem zugewandten ersten Seite 80 des Übertragungselements 58 von Fig. 1 ist mindestens ein Rastkörper 82 angeordnet, der z.B. kugelförmig oder walzenförmig ausgebildet sein kann. Das Hohlrad 54 weist bevorzugt mindestens einen Rastnocken 84 auf, der beim Ansprechen der Drehmomentkupplung 40 vom Rastkörper 82 überlaufen werden kann. Dies wird als "Überrasten" der Drehmomentkupplung 40 bezeichnet.

Das Übertragungselement 58 ist bevorzugt mit mindestens einer und illustrativ sechs Druckfedern, von denen hier lediglich zwei Druckfedern 86 sichtbar sind, gegen das Hohlrad 54 axial vorgespannt. Freie axiale Enden der Druckfedern 86 liegen jeweils an einer zweiten Seite 88 des Übertragungselements 58 an, die vom Getriebe 20, bzw. dem dreistufigen Planetengetriebe 22, weg weist. Zur Erhöhung der axialen Vorspannkraft bzw. Anpresskraft des vorzugsweise als Druckplatte dienenden bzw. ausgebildeten Übertragungselements 58 ist in den bevorzugt zylindrischen Druckfedern 86 hier jeweils koaxial eine weitere, der besseren zeichnerischen Übersicht halber nicht bezeichnete zylindrische Druckfeder, aufgenommen.

Von dem Übertragungselement 58 wegweisende, nicht bezeichnete Enden der (äußeren) Druckfedern 86 sind jeweils auf einem fingerartigen Fortsatz 90 eines Federhalters 92 aufgenommen und hierdurch in radialer Richtung verlässlich geführt. Eine axiale Position des Federhalters 92 und damit eine Höhe der axialen Vorspannung des Übertragungselements 58 lässt sich durch benutzerseitiges Verdrehen des Einstellrings 48 von Fig. 1 um die Längsmittelachse 46 variieren. Durch axiales Verschieben des Federhalters 92 in Richtung des Getriebes 20 wird die axiale Vorspannung des Übertragungselements 58 gegen die am Hohlrad 54 anliegenden Rastkörper 82 erhöht und umgekehrt. Durch die Erhöhung der axialen Vorspannung wird ein Drehmoment, ab dem die Drehmomentkupplung 40 anspricht bzw. überrastet, wobei der mindestens eine Rastkörper 82 den Rastnocken 84 des Hohlrads 54 überläuft, erhöht oder umgekehrt reduziert. Die als Zylinderfedern ausgeführten Druckfedern 86 ermöglichen beim Ansprechen der Drehmomentkupplung 40 ein federnd-axiales Ausweichen des Übertragungselements 58 in einer vom Getriebe 20 wegweisenden Richtung, so dass der mindestens eine Rastnocken 84 des Hohlrads 54 von dem mindestens einen Rastkörper 82 überlaufen werden kann, die Abtriebsspindel 42 von Fig. 1, die in den zwei vorzugsweise als Wälzlager und bevorzugt als Radialkugellager ausgebildeten, sowie axial voneinander beabstandeten Lagern 50, 52 zumindest verdrehbar um die Längsmittelachse 46 gelagert ist, stillsteht und keine Drehmomentübertragung mittels der Drehmomentkupplung 40 mehr erfolgt.

Wie bei Fig. 1 beschrieben, gibt der Blockierring 62 der Drehmomentkupplung 40 in seiner ersten, bevorzugt einem Schraubmodus zugeordneten Betriebsstellung die axiale Verschiebbarkeit des Übertragungselements 58 zur Aktivierung der Drehmomentkupplung 40 frei, während der Blockierring 62 in seiner zweiten, bevorzugt einem Bohrmodus zugeordneten Betriebsstellung die axiale Beweglichkeit des Übertragungselements 58 zur Deaktivierung der Drehmomentkupplung 40 zumindest begrenzt und vorzugsweise vollständig blockiert. Darüber hinaus ermöglicht die gemäß der alternativen Ausführungsform von Fig. 2 ausgebildete Drehmomentkupplung 40 eine dritte Betriebsstellung des Blockierrings 62. In dieser dritten Betriebsstellung wird wiederrum die axiale Beweglichkeit des Übertragungselements 58 zur Deaktivierung der Drehmomentkupplung 40 zumindest begrenzt und vorzugsweise vollständig blockiert, und darüber hinaus wird nur in der dritten Betriebsstellung die axiale Lagefixierung des zweiten Lagers 52 aufgehoben, so dass eine axiale Verschiebbarkeit der Abtriebsspindel 42 von Fig. 1 ermöglicht wird.

Hierdurch kann die Handwerkzeugmaschine 10 von Fig. 1 bei einer Verwendung der gemäß der alternativen Ausführungsform von Fig. 2 ausgebildeten Drehmomentkupplung 40 bevorzugt mit einem nicht dargestellten, dem Fachmann aus dem Stand der Technik jedoch hinlänglich geläufigen Schlagwerk versehen werden, das bei inaktiver bzw. deaktivierter Drehmomentkupplung 40 und axial verschiebbarer Abtriebsspindel 42 im Betrieb zugeschaltet wird. Hierbei ist die dritte Betriebsstellung des Blockierrings 62 einem Schlagbohrmodus zugeordnet, in dem die axiale Lagefixierung des zweiten Lagers 52 aufgehoben wird, damit sich die Abtriebsspindel 42 in axialer Richtung schlagend-pulsierend zumindest geringfügig hin- und herbewegen kann.

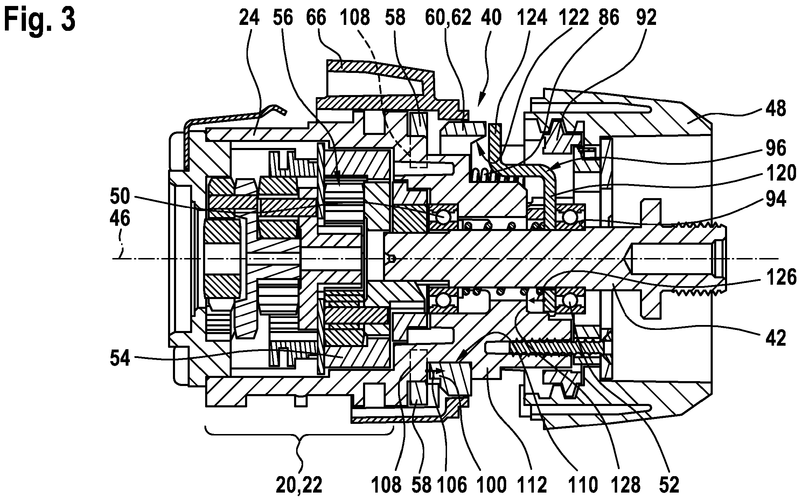

Um dies zu ermöglichen, ist das zweite Lager 52 bevorzugt zwischen einer umlaufenden Schulter 94 der Abtriebsspindel 42 und einem bevorzugt als sogenannten Dreibein ausgebildeten Lagefixierelement 96 axial festgelegt. Die Betätigung bzw. Freigabe des Dreibeins 96 erfolgt erfindungsgemäß mittels des Blockierrings 62 bzw. des Blockierelements 60 von Fig. 1 (vgl. Fig. 3). Im in Fig. 2 dargestellten Ausführungsbeispiel ist der Blockierring 62 in seiner ersten Betriebsstellung, in der die axiale Verschiebbarkeit des Übertragungselements 58 freigegeben ist, aber das Dreibein 96 in einer Fixierungsposition ist, in der die axiale Lagefixierung des zweiten Lagers 52 gegeben ist, so dass die Abtriebsspindel 42 in axialer Richtung unbeweglich ist und der Schlagbohrmodus somit inaktiv ist. Vielmehr ist wie bei Fig. 1 beschrieben der Schraubmodus aktiv.

Erfindungsgemäß weist der Blockierring 62 mindestens ein Abstützelement 100 auf. Das stirnseitig am Blockierring 62 ausgebildete Abstützelement 100 ist bevorzugt in Richtung des Getriebes 20 orientiert.

Das im Getriebegehäuse 24 bevorzugt verdrehgesichert aufgenommene und somit nur axial bewegliche Übertragungselement 58 verfügt über mindestens eine Aussparung 102. Diese hat vorzugsweise eine ungefähr kreisringsektorförmige Geometrie.

Der Blockierring 62 ist bevorzugt verdrehgesichert in dem Verstellelement 66 von Fig. 1 aufgenommen. Somit lässt sich der Blockierring 62 benutzerseitig auf komfortable und feinfühlige Weise durch Verdrehen des Verstellelements 66 gleichfalls verdrehen. In Fig. 2 befindet sich der Blockerring 62 in seiner eingangs bereits kurz erwähnten ersten Betriebsstellung, bzw. die Drehmomentkupplung 40 ist im Schraubmodus, in dem die mindestens eine Aussparung 102 des Übertragungselements 58 das mindestens eine Abstützelement 100 des Blockierrings 62 bei einer axialen Verschiebung des Übertragungselements 58 aufnehmen kann, bzw. kann das Abstützelement 100 in die Aussparung 102 eintauchen. Hierdurch ist im Fall der Überschreitung eines voreingestellten Drehmomentes sichergestellt, dass der mindestens eine Rastkörper 82 den mindestens einen Rastnocken 84 am Hohlrad 54 überlaufen und hierbei das Übertragungselement 58 in einer vom Getriebe 20 wegweisenden Richtung axial ausweichen kann. Bei aktivierter Drehmomentkupplung 40 und einer Überschreitung des, mittels des Einstellrings 48 und einer daran bevorzugt angeordneten Skala 104 vorgewählten, maximalen Drehmoments vollzieht das Übertragungselement 58 somit in einer vom Getriebe 20 wegweisenden Richtung einen Axialhub 106.

Durch das Verdrehen des Blockierrings 62 mit Hilfe des Verstellelements 66 um einen geeigneten Drehwinkel, wird dieser in seine zweite Betriebsstellung verdreht, in der das Eintauchen des mindestens einen Abstützelements 100 des Blockierrings 62 in die mindestens eine Aussparung 102 des Übertragungselements 58 durch mindestens einen Vorsprung 108 des Übertragungselements 58, oder durch des Übertragungselement 58 als solches, unterbunden wird. Hierdurch wird der Axialhub 106 in einer vom Getriebe 20 wegweisenden Richtung zumindest so weit limitiert, dass der mindestens eine Rastnocken 84 am Hohlrad 54 den mindestens einen Rastkörper 82 nicht mehr überlaufen kann und die Drehmomentkupplung 40 in den Bohrmodus mit deaktivierter Drehmomentkupplung 40 versetzt ist. Im Bohrmodus steht an der Abtriebsspindel 42 bevorzugt das maximal vom Planetengetriebe 22 übertragbare Drehmoment zur Verfügung. Durch ein weiteres Verdrehen des Blockierrings 62 mit Hilfe des Verstellelements 66 um einen geeigneten Drehwinkel, wird dieser in seine dritte Betriebsstellung verdreht, in der das Eintauchen des mindestens einen Abstützelements 100 des Blockierrings 62 in die mindestens eine Aussparung 102 des Übertragungselements 58 wiederum durch den mindestens einen Vorsprung 108 des Übertragungselements 58, oder durch des Übertragungselement 58 als solches, unterbunden wird. Darüber hinaus gibt der Blockierring 62 in seiner dritten Betriebsstellung das Dreibein 96 frei, sodass die axiale Lagefixierung des zweiten Lagers 52 aufgehoben wird und die Drehmomentkupplung 40 in den Schlagbohrmodus mit deaktivierter Drehmomentkupplung 40 versetzt ist. Im Schlagbohrmodus steht an der Abtriebsspindel 42 bevorzugt ebenfalls das maximal vom Planetengetriebe 22 übertragbare Drehmoment zur Verfügung.

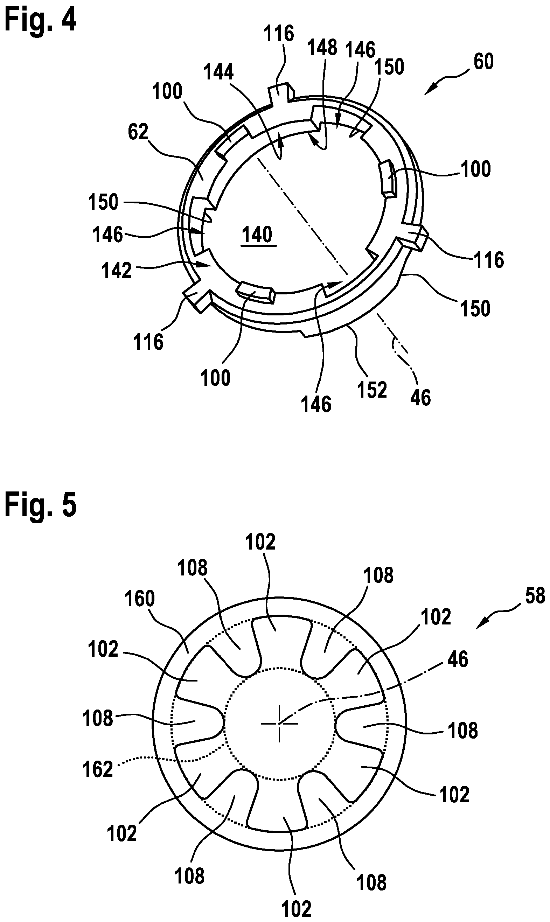

Erfindungsgemäß ist zur Aufnahme des Blockierelements 60 bzw. des Blockierrings 62 umfangsseitig am Getriebegehäuse 24 zumindest abschnittsweise eine Nut 110 mit mindestens einer Abstützrippe 112 bevorzugt integral zum Getriebegehäuse 24 ausgeformt. Ferner ist am Blockierring 62 mindestens ein radial auswärts gerichteter Fortsatz bevorzugt integral ausgeformt, der zur drehfesten, insbesondere formschlüssigen Ankopplung des Blockierrings 62 an das außenliegende, ringförmige und benutzerseitig zu verdrehende Verstellelement 66 vorgesehen ist. Bevorzugt sind mindestens drei, umfangsseitig gleichmäßig zueinander beabstandete Fortsätze an dem Blockierring 62 ausgebildet (vgl. Fig. 4).

Fig. 3 zeigt die Anordnung von Fig. 2 mit dem Hohlrad 54 der letzten Getriebestufe 56 des als Planetengetriebes 22 ausgeführten Getriebes 20, das über die Drehmomentkupplung 40 die Abtriebsspindel 42 antreibt, wobei die Vorgabe des Drehmoments, ab dem die aktivierte Drehmomentkupplung 40 anspricht bzw. überrastet, mit Hilfe des Einstellrings 48 variiert wird. Die Abtriebsspindel 42 ist mittels des ersten und zweiten Lagers 50, 52 zumindest drehbeweglich um die Längsmittelachse 46 in dem Getriebegehäuse 24 gelagert. Das hier exemplarisch als Blockierring 62 ausgeführte Blockierelement 60 ist unter anderem durch die Nut 110 und die Abstützrippe 112 von Fig. 2 im Getriebegehäuse 24 aufgenommen und kann mittels des Verstellelements 66 um die Längsmittelachse 46 vom Benutzer verdreht werden. Die Drehmomentkupplung 40 umfasst weiterhin das Übertragungselement 58, das mittels der auf dem Federhalter 92 aufgenommenen Druckfeder 86 axial in Richtung des Hohlrads 54 vorgespannt ist.

Das zweite Lager 52 liegt an der Schulter 94 der Abtriebsspindel 42 sowie an einem rechtwinklig zur Längsmittelachse 46 verlaufenden ersten Schenkel 120 des Dreibeins 96 an und ist hierdurch axial festgelegt, so dass die Abtriebsspindel 42 ebenfalls axial unbeweglich ist und somit der Schlagbohrmodus inaktiv ist. Der Blockierring 62 hat hier in Bezug zur Längsmittelachse 46 eine Drehstellung eingenommen, in der das Abstützelement 100 illustrativ am Getriebegehäuse 24 anliegt, so dass das Abstützelement 100 in die mindestens eine, hier jedoch nicht sichtbare Aussparung 102 des Übertragungselements 58 eintauchen kann, so dass die Drehmomentkupplung 40 beim Erreichen des mittels des Einstellrings 48 vorgewählten Drehmoments überrasten und den Axialhub 106 ausführen kann. Dies bedeutet, dass der mindestens eine Rastkörper 82 von Fig. 2 den mindestens einen Rastnocken 84 von Fig. 2 des Hohlrads 54 - die hier beide nicht sichtbar sind -wie bei Fig. 2 beschrieben überlaufen kann, da ein federnd-axiales Ausweichen des am Übertragungselement 58 anliegenden, mindestens einen Rastkörpers 82 und damit des Übertragungselements 58 selbst in einer von dem Getriebe 20 wegweisenden Richtung möglich ist und sich die Drehmomentkupplung 40 somit im Schraubmodus befindet.

Gemäß einer Ausführungsform ist an dem Blockierring 62 mindestens eine Anlauframpe 122 ausgebildet, bevorzugt integral, an der hier illustrativ ein zweiter Schenkel 124 des Dreibeins 96 in etwa anliegt. Der zweite Schenkel 124 des Dreibeins 96 ist in Richtung des Getriebes 20 parallel versetzt zum ersten Schenkel 120 am Dreibein 96 ausgebildet, wodurch sich eine angenähert Z-förmige Geometrie des Dreibeins 96 ergibt. Durch das Verdrehen des Blockierrings 62 aus der Zeichenebene heraus, gleitet der zweite Schenkel 124 des Dreibeins 96 an der Anlauframpe 122 hinab, wodurch sich das Dreibein 96 und damit auch dessen erster Schenkel 120 um einen Axialhub 126 in Richtung des Planetengetriebes 22 bzw. des Getriebes 20 verschiebt. Hierdurch wird die axiale Lagefixierung des zweiten Lagers 52 und somit der Abtriebsspindel 42 aufgehoben und der Schlagbohrmodus aktiviert. Zugleich verbleibt die Drehmomentkupplung 40 wie oben beschrieben im inaktiven bzw. deaktivierten Zustand. Durch die mindestens eine Anlauframpe 122 wird im Ergebnis eine Drehbewegung des Blockierrings 62 in eine translatorische Verschiebebewegung des Dreibeins 96 entlang der Längsmittelachse 46 transformiert.

Fig. 4 zeigt das gemäß einer bevorzugten Ausführungsform ausgebildete Blockierelement 60 der Drehmomentkupplung 40 von Fig. 1 bis Fig. 3, das illustrativ eine im Wesentlichen hohlzylindrische, sowie symmetrisch zur Längsmittelachse 46 ausgebildete Formgebung mit einer kreisrunden, zentrischen Öffnung 140 aufweist. An einer dem Getriebe 20 von Fig. 1 bis Fig. 3 zugewandten ersten Seite 142 sind hier beispielhaft drei Abstützelemente 100 integral zum Blockierring 62 ausgeformt. Diese Abstützelemente 100 sind vorzugsweise gleichmäßig und hier somit illustrativ um 120° zueinander umfangsseitig versetzt ausgebildet und weisen jeweils eine ungefähr kreisringsektorförmige Umfangsgeometrie auf. Nicht bezeichnete Enden der Abstützelemente 100 sind bevorzugt jeweils halbkreisförmig gerundet angefast ausgeführt, um das seitliche Anlaufen an die Vorsprünge des Übertragungselementes 58 von Fig. 1 bis Fig. 3 zu erleichtern (vgl. Fig. 5).

Zur Montage des Blockierrings 62 am Getriebegehäuse 24 der Handwerkzeugmaschine 10 von Fig. 1 sind zwischen jeweils zwei benachbarten Abstützelementen 100 in einer zylindrischen Innenfläche 144 der Öffnung 140 bevorzugt drei vorzugsweise ebenfalls umfangsseitig gleichmäßig zueinander beabstandet angeordnete Aussparungen 146 vorgesehen. An einer zweiten, von der ersten Seite 142 bzw. dem Getriebe abgewandten zweiten Seite 148 des Blockierrings 146 sind ferner bevorzugt drei keilförmige Anlauframpen 150 zum axialen Verschieben des Dreibeins 96 von Fig. 2 und Fig. 3 und damit zum Aktivieren und Deaktivieren des Schlagbohrmodus wie bei Fig. 2 und Fig. 3 beschrieben vorgesehen. Die Anlauframpen 150 gehen jeweils in eine zugeordnete Planfläche über, von denen hier illustrativ nur eine Planfläche 152 bezeichnet ist.

Die Planflächen 152 verlaufen bevorzugt parallel beabstandet bzw. erhöht in Bezug zur zweiten Seite 148 des Blockierrings 62. Zur Anbindung des Blockierrings 62 an das Verstellelement 66 von Fig. 1 bis Fig. 3 dienen die hier bevorzugt drei strahlenförmig bzw. radial auswärts gerichteten und jeweils angenähert quaderförmigen Fortsätze 116. Diese drei Fortsätze 116 sind vorzugsweise umfangsseitig gleichmäßig um einen Winkel 120° voneinander beabstandet und bevorzugt integral zum Blockierring 62 ausgebildet. Die drei Abstützelemente 100 und die drei Aussparungen 146 sind bevorzugt umfangsseitig um jeweils einen Winkel von 60° zueinander versetzt positioniert. Die drei Aussparungen 146 sind vorzugsweise ebenfalls jeweils umfangsseitig um einen Winkel von 120° voneinander beabstandet und auch die drei Anlauframpen 150 sind vorzugsweise jeweils umfangsseitig um einen Winkel von 120° voneinander beabstandet. Der Blockierring 62 ist vorzugsweise aus Metall oder einem Hochleistungskunststoff gefertigt.

Fig. 5 zeigt das gemäß einer bevorzugten Ausführungsform ausgebildete Übertragungselement 58 der Drehmomentkupplung 40 von Fig. 1 bis Fig. 3. Dieses dient wie oben beschrieben vorzugsweise als Druckplatte und ist bevorzugt scheibenförmig ausgebildet.

Gemäß einer Ausführungsform weist das Übertragungselement 58 eine zu der Längsmittelachse 46 von Fig. 1 symmetrische und kreisringförmige Grundplatte 160 auf. An dieser sind hier exemplarisch sechs radial einwärts gerichtete, fingerartige Vorsprünge 108 einstückig ausgebildet. Diese Vorsprünge 108 sind bevorzugt jeweils um 60° zueinander beabstandet, wobei zwischen benachbarten, vorzugsweise eine kreissektorförmige Gestalt aufweisenden Vorsprüngen 108 jeweils eine bevorzugt annähernd trapezförmige Aussparung 102 ausgebildet ist. Der besseren zeichnerischen Übersicht halber nicht bezeichnete, halbkreisförmige Enden der Vorsprünge 108 berühren vorzugsweise jeweils eine gedachte, zur Längsmittelachse 46 ebenfalls zentrische, sowie zylindrische Innenfläche 162.

Es wird darauf hingewiesen, dass die bei Fig. 4 und Fig. 5 beschriebenen Ausführungsformen lediglich beispielhaften Charakter haben und nicht als Einschränkung der Erfindung zu verstehen sind. Vielmehr können das Blockierelement 60 und das Übertragungselement 58, sowie das Lagefixierelement 96 von Fig. 2 und Fig. 3 auf eine Vielzahl unterschiedlicher Arten und Weisen ausgeführt sein, solange die oben beschriebenen Funktionalitäten erfindungsgemäß ermöglicht werden. Z.B. kann die Anzahl und Anordnung der Abstützelemente 100, der Aussparungen 146, der Anlauframpen 150 sowie der Fortsätze 116 des Blockierelements 60 verändert werden, ohne die oben beschriebene Wirkungsweise des Blockierelements 60 zu verändern. Analog hierzu kann auch die Anzahl und Anordnung der Vorsprünge 108 und Aussparungen 102 verändert werden, ohne die oben beschriebene Wirkungsweise des Übertragungselements 58 zu verändern.

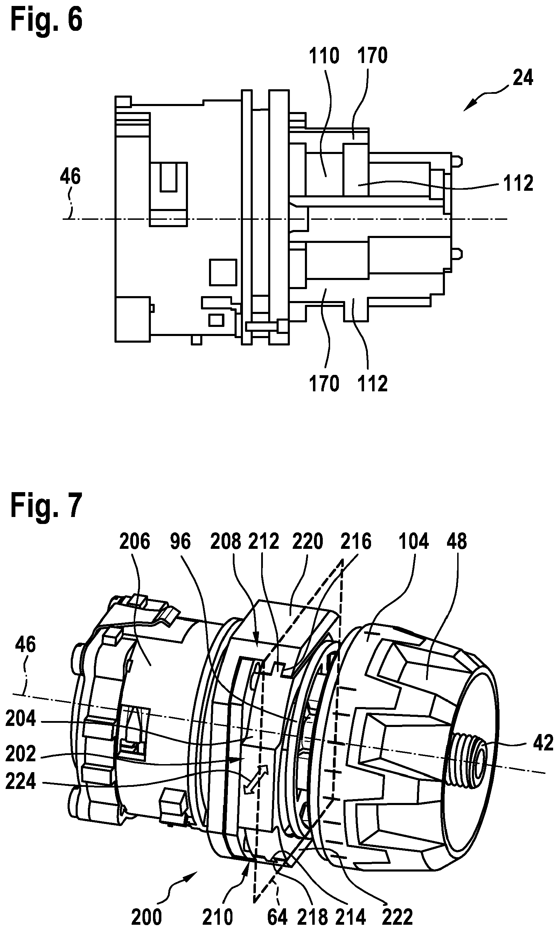

Fig. 6 zeigt das gemäß einer bevorzugten Ausführungsform ausgebildete Getriebegehäuse 24 von Fig. 1 bis Fig. 3. Dieses ist bevorzugt einstückig in einem Gussverfahren aus einem Kunststoffmaterial gefertigt und verfügt zur Aufnahme des hier nicht dargestellten Blockierrings 62 von Fig. 1 bis Fig. 3 über eine umfangsseitig zumindest abschnittsweise ausgebildete Nut 110 und eine ebenfalls zumindest abschnittsweise ausgeformte Abstützrippe 112, die die hohen vom Blockierring eingebrachten Axialkräfte aufnehmen kann. Zur weiteren Versteifung des Getriebegehäuses 24 sind vorzugsweise mindestens eine und hier exemplarisch drei parallel zur Längsmittelachse 46 von Fig. 1 und quer zu den Abstützrippen 112 verlaufende Versteifungsrippen 170 am Getriebegehäuse 24 vorgesehen.

Fig. 7 zeigt das Getriebe 20 von Fig. 1 mit der gemäß einer weiteren alternativen Ausführungsform ausgebildeten Drehmomentkupplung 40 von Fig. 1 bis Fig. 3. Diese weist im Gegensatz zu den bei Fig. 1 bis Fig. 3 beschriebenen Ausführungsformen ein transversal zur Längsmittelachse 46 der Abtriebsspindel 42 verschiebbares Blockierelement 202 auf und ist deshalb hier mit dem Bezugszeichen 200 versehen.

Das anhand der vorstehenden Fig. 1 bis Fig. 4 erläuterte Blockierelement 60 ist illustrativ jeweils als der zumindest annähernd torusförmige Blockierring 62 ausgebildet, der um die Längsmittelachse 46 verdrehbar, im Übrigen aber axial unbeweglich in der Handwerkzeugmaschine 10 von Fig. 1 bzw. an deren Getriebegehäuse 24 aufgenommen ist. Im Gegensatz hierzu ist das Blockierelement 202 beispielhaft als ein Schieber 204 ausgeführt, der transversal in bzw. quer zur Längsmittelachse 46 verschiebbar zur (Bewegungs-)ebene 64 von Fig. 1 in einem im Vergleich zum Getriebegehäuse 24 von Fig. 1 geringfügig modifizierten Getriebegehäuse 206 aufgenommen ist.

Der Schieber 204 weist bevorzugt eine näherungsweise mehreckige, plattenförmige Gestalt auf. Zur Führung des Schiebers 204 in dem Getriebegehäuse 206 bzw. parallel zu der (Bewegungs-)Ebene 64 verfügt dieser vorzugsweise über zwei diametral an einer Ober- und an einer Unterseite 208, 210 ausgebildete Federn 212, 214. Die Oberseite 208 und die Unterseite 210 des Schiebers 204 verlaufen abgesehen von den Federn 212, 214 bevorzugt zumindest annähernd parallel beabstandet zueinander. Die Federn 212, 214 sind illustrativ in zwei aufeinander zu gerichteten Nuten 216, 218 zumindest bereichsweise formschlüssig aufgenommen, die an zwei gleichfalls parallel zueinander ausgeführten und in Richtung des Einstellrings 48 von Fig. 1 der Drehmomentkupplung 200 weisenden Vorsprüngen 220, 222 des Getriebegehäuses 206 ausgebildet sind. Das Dreibein 96 von Fig. 2 und Fig. 3 dient hierbei wiederum zum Aktivieren eines zugeordneten Schlagwerks bzw. des Schlagbohrmodus der Handwerkzeugmaschine 10 von Fig. 1.

Im Gegensatz zu dem rotierenden Blockierring 62 von Fig. 1 bis Fig. 3 erfolgt hier ein Wechsel zwischen der ersten, der zweiten und der dritten Betriebsstellung, d.h. dem Schraubmodus, dem Bohrmodus sowie dem Schlagbohrmodus, allein durch das in Bezug zur Längsmittelachse 46 queraxial bzw. transversal in Richtung eines Doppelpfeils 224 erfolgende, bevorzugt lineare Bewegen des Schiebers 204 in Relation zu dem Getriebegehäuse 206 bzw. parallel zu der (Bewegungs-)Ebene 64. Im Übrigen entspricht die Funktionsweise der Drehmomentkupplung 200 der vorstehend, insbesondere anhand der Fig. 1 bis Fig. 5 erläuterten Drehmomentkupplung 40, so dass, um Wiederholungen zu vermeiden, an dieser Stelle auf die zugehörigen Beschreibungsteile verwiesen sei.

## Patentansprüche

1. Handwerkzeugmaschine (10), insbesondere Schrauber oder Bohrschrauber, mit einem in einem Getriebegehäuse (24, 206) angeordneten Getriebe (20) zum Antrieb einer Abtriebsspindel (42), und mit einer der Abtriebsspindel (42) zugeordneten Drehmomentkupplung (40, 200), wobei ein in Richtung einer Längsmittelachse (46) der Abtriebsspindel (42) axial verschiebbares Übertragungselement (58) vorgesehen ist, wobei ein in Richtung der Längsmittelachse (46) axial unbewegliches und in einer quer zur Längsmittelachse (46) angeordneten Ebene (64) bewegliches Blockierelement (60, 202) zur Aktivierung und Deaktivierung der Drehmomentkupplung (40, 200) vorgesehen ist, das dazu ausgebildet ist, in mindestens einer ersten Betriebsstellung eine axiale Verschiebbarkeit des Übertragungselements (58) in Richtung der Längsmittelachse (46) zur Aktivierung der Drehmomentkupplung (40, 200) freizugeben und in mindestens einer zweiten Betriebsstellung die axiale Verschiebbarkeit des Übertragungselements (58) zur Deaktivierung der Drehmomentkupplung (40, 200) zumindest zu begrenzen, wobei die Abtriebsspindel (42) in der zweiten Betriebsstellung des Blockierelements (60, 202) relativ zum Getriebegehäuse (24, 206) axial in Richtung der Längsmittelachse (46) zumindest im Wesentlichen unbeweglich ist, wobei stirnseitig an dem Blockierelement (60, 202) mindestens ein Abstützelement (100) ausgebildet ist, das in Richtung des Übertragungselements (58) weist, **dadurch gekennzeichnet, dass** das Getriebegehäuse (24, 206) zur Aufnahme des Blockierelements (60, 202) an seinem Außenumfang zumindest abschnittsweise eine Nut (110) mit mindestens einer Abstützrippe (112) aufweist.

2. Handwerkzeugmaschine nach Anspruch 1, **dadurch gekennzeichnet, dass** das Blockierelement (60, 202) dazu ausgebildet ist, in mindestens einer dritten Betriebsstellung die axiale Verschiebbarkeit des Übertragungselements (58) zur Deaktivierung der Drehmomentkupplung (40, 200) zumindest zu begrenzen, wobei die Abtriebsspindel (42) in der dritten Betriebsstellung des Blockierelements (60, 202) relativ zum Getriebegehäuse (24, 206) axial in Richtung der Längsmittelachse (46) beweglich ist.

3. Handwerkzeugmaschine nach Anspruch 2, **dadurch gekennzeichnet, dass** die erste Betriebsstellung einem Schraubmodus zugeordnet ist, die zweite Betriebsstellung einem Bohrmodus zugeordnet ist und die dritte Betriebsstellung einem Schlagbohrmodus zugeordnet ist.

4. Handwerkzeugmaschine nach einem der vorhergehenden Ansprüche, **dadurch gekennzeichnet, dass** das Blockierelement (60) ein um die Längsmittelachse (46) verdrehbarer Blockierring (62) ist.

5. Handwerkzeugmaschine nach Anspruch 4, **dadurch gekennzeichnet, dass** der Blockierring (62) verdrehgesichert in einem zugeordneten Verstellelement (66) aufgenommen ist.

6. Handwerkzeugmaschine nach einem der vorhergehenden Ansprüche, **dadurch gekennzeichnet, dass** das Getriebe (20) nach Art eines Planetengetriebes (22) ausgebildet ist, wobei an einem Hohlrad (54) einer der Drehmomentkupplung (40, 200) zugewandten Getriebestufe (56) des Planetengetriebes (22) mindestens ein Rastnocken (84) ausgebildet ist.

7. Handwerkzeugmaschine nach Anspruch 6, **dadurch gekennzeichnet, dass** zwischen dem Hohlrad (54) und einer dem Hohlrad (54) zugewandten Seite (80) des Übertragungselements (58) mindestens ein Rastkörper (82) angeordnet ist und das Übertragungselement (58) mittels mindestens einer Druckfeder (86) gegen das Hohlrad (54) axial vorgespannt ist, wobei die mindestens eine Druckfeder (86) an einer vom Getriebe (20) abgewandten Seite (88) des Übertragungselements (58) anliegt und sich an einem zugeordneten Federhalter (92) abstützt.

8. Handwerkzeugmaschine nach Anspruch 7, **dadurch gekennzeichnet, dass** eine axiale Position des Federhalters (92) mittels eines um die Längsmittelachse (46) der Abtriebsspindel (42) verdrehbaren Einstellrings (48) zur Anpassung einer axialen Vorspannung der mindestens einen Druckfeder (86) einstellbar ist.

9. Handwerkzeugmaschine nach einem der vorhergehenden Ansprüche, **dadurch gekennzeichnet, dass** das Übertragungselement (58) mindestens eine Aussparung (102) aufweist.

10. Handwerkzeugmaschine nach einem der vorhergehenden Ansprüche, **dadurch gekennzeichnet, dass** das Blockierelement (60) mindestens einen auswärts gerichteten Fortsatz (116) aufweist.

11. Handwerkzeugmaschine nach Anspruch 5 und 10, **dadurch gekennzeichnet, dass** der mindestens eine Fortsatz (116) radial auswärts gerichtet ist und die Anbindung des Blockierelements (60) an das Verstellelement (66) ermöglicht.

12. Handwerkzeugmaschine nach einem der vorhergehenden Ansprüche, **dadurch gekennzeichnet, dass** das Blockierelement (60, 202) an der Abstützrippe (112) zumindest teilweise anliegt, wobei die Abstützrippe (112) dazu ausgebildet ist, die vom Blockierelement (60, 202) eingebrachten Axialkräfte aufzunehmen.

13. Handwerkzeugmaschine nach einem der Ansprüche 7 bis 12, **dadurch gekennzeichnet, dass** bei deaktivierter Drehmomentkupplung das Abstützelement (100) des Blockierelements (60, 202) einen Axialhub (106) des Rastkörpers (82) und des Übertragungselements (58) in eine vom Getriebe (20) abgewandte Richtung derart begrenzt, dass der Rastkörper (82) zur Deaktivierung der Drehmomentkupplung (40, 200) zumindest bereichsweise an dem Rastnocken (84) des Hohlrads (54) anliegt.

14. Handwerkzeugmaschine nach einem der Ansprüche 8 bis 13, **dadurch gekennzeichnet, dass** bei aktivierter Drehmomentkupplung (40, 200) das Abstützelement (100) am Blockierelement (60, 202) in die Aussparung (102) des Übertragungselements (58) zumindest bereichsweise derart eintaucht, dass der Rastkörper (82) den Rastnocken (84) beim Überschreiten eines voreingestellten Drehmoments überläuft.

15. Handwerkzeugmaschine nach einem der vorhergehenden Ansprüche, **dadurch gekennzeichnet, dass** das Blockierelement (60, 202) bei aktivierter Drehmomentkupplung (40, 200) direkt oder indirekt arretierbar ist.

16. Handwerkzeugmaschine nach einem der vorhergehenden Ansprüche, **dadurch gekennzeichnet, dass** das Blockierelement (60, 202) zumindest eine, insbesondere keilförmige, Anlauframpe (122, 150) an einer von dem Getriebe (20) abgewandten Seite (148) aufweist.

17. Handwerkzeugmaschine nach Anspruch 16, **dadurch gekennzeichnet, dass** die, insbesondere keilförmige, Anlauframpe (122, 150) dazu ausgebildet ist, ein Lagefixierelement (96) axial zu verschieben zum Aktivieren und Deaktivieren eines Schlagbohrmodus.

18. Handwerkzeugmaschine nach Anspruch 16 oder 17, **dadurch gekennzeichnet, dass** die, insbesondere, keilförmige Anlauframpe (122, 150) in eine zugeordnete Planfläche (152) übergeht und die Planfläche (152) in Bezug zu der von dem Getriebe (20) abgewandten Seite (148) parallel beabstandet verläuft.

## Claims

1. Hand-held power tool (10), in particular screwdriver or drill driver, having a gear (20), arranged in a gear housing (24, 206), for driving an output spindle (42), and having a torque clutch (40, 200) assigned to the output spindle (42), wherein a transmission element (58) that is axially movable in the direction of a longitudinal centre axis (46) of the output spindle (42) is provided, wherein a blocking element (60, 202) for activating and deactivating the torque clutch (40, 200) is provided, said blocking element (60, 202) being axially immovable in the direction of the longitudinal centre axis (46) and movable in a plane (64) arranged transversely to the longitudinal centre axis (46) and being configured, in at least one first operating position, to enable axial movability of the transmission element (58) in the direction of the longitudinal centre axis (46) in order to activate the torque clutch (40, 200) and, in at least one second operating position, to at least limit the axial movability of the transmission element (58) in order to deactivate the torque clutch (40, 200), wherein the output spindle (42), in the second operating position of the blocking element (60, 202), is at least substantially immovable axially in the direction of the longitudinal centre axis (46) relative to the gear housing (24, 206), wherein at least one supporting element (100) is formed on an end face of the blocking element (60, 202), said supporting element (100) facing in the direction of the transmission element (58), **characterized in that** the gear housing (24, 206), to receive the blocking element (60, 202), has, at least partially, on its outer circumference a groove (110) having at least one supporting rib (112).

2. Hand-held power tool according to Claim 1, **characterized in that** the blocking element (60, 202) is configured, in at least one third operation position, to at least limit the axial movability of the transmission element (58) in order to deactivate the torque clutch (40, 200), wherein the output spindle (42), in the third operating position of the blocking element (60, 202), is movable axially in the direction of the longitudinal centre axis (46) relative to the gear housing (24, 206).

3. Hand-held power tool according to Claim 2, **characterized in that** the first operating position is assigned to a screwing mode, the second operating position is assigned to a drilling mode and the third operating position is assigned to an impact drilling mode.

4. Hand-held power tool according to one of the preceding claims, **characterized in that** the blocking element (60) is a blocking ring (62) that is able to be rotated about the longitudinal centre axis (46) .

5. Hand-held power tool according to Claim 4, **characterized in that** the blocking ring (62) is received in an associated adjustment element (66) so as to be secured against rotation.

6. Hand-held power tool according to one of the preceding claims, **characterized in that** the gear (20) is configured in the manner of a planetary gear (22), wherein at least one latching cam (84) is formed on a ring gear (54) of a gear stage (56), facing the torque clutch (40, 200), of the planetary gear (22).

7. Hand-held power tool according to Claim 6, **characterized in that** at least one latching body (82) is arranged between the ring gear (54) and a side (80), facing the ring gear (54), of the transmission element (58) and the transmission element (58) is axially preloaded against the ring gear (54) by means of at least one compression spring (86), wherein the at least one compression spring (86) bears on a side (88), facing away from the gear (20), of the transmission element (58) and is supported on an associated spring holder (92).

8. Hand-held power tool according to Claim 7, **characterized in that** an axial position of the spring holder (92) is settable by means of a setting ring (48), which is rotatable about the longitudinal centre axis (46) of the output spindle (42), in order to adapt an axial pretension of the at least one compression spring (86).

9. Hand-held power tool according to one of the preceding claims, **characterized in that** the transmission element (58) has at least one cutout (102) .

10. Hand-held power tool according to one of the preceding claims, **characterized in that** the blocking element (60) has at least one outwardly directed protrusion (116).

11. Hand-held power tool according to Claims 5 and 10, **characterized in that** the at least one protrusion (116) is directed radially outwardly and allows the blocking element (60) to be attached to the adjustment element (66).

12. Hand-held power tool according to one of the preceding claims, **characterized in that** the blocking element (60, 202) bears at least partially on the supporting rib (112), wherein the supporting rib (112) is configured to absorb the axial forces introduced by the blocking element (60, 202).

13. Hand-held power tool according to one of Claims 7 to 12, **characterized in that**, with the torque clutch deactivated, the supporting element (100) of the blocking element (60, 202) limits an axial travel (106) of the latching body (82) and of the transmission element (58)in a direction facing away from the gear (20) such that the latching body (82), to deactivate the torque clutch (40, 200), bears at least regionally on the latching cam (84) of the ring gear (54).

14. Hand-held power tool according to one of Claims 8 to 13, **characterized in that**, with the torque clutch (40, 200) activated, the supporting element (100) on the blocking element (60, 202) passes into the cutout (102) in the transmission element (58) at least regionally such that the latching body (82) passes over the latching cam (84) when a preset torque is exceeded.

15. Hand-held power tool according to one of the preceding claims, **characterized in that** the blocking element (60, 202) is directly or indirectly lockable with the torque clutch (40, 200) activated.

16. Hand-held power tool according to one of the preceding claims, **characterized in that** the blocking element (60, 202) has at least one, in particular wedge-shaped, run-on ramp (122, 150) on a side (148) facing away from the gear (20).

17. Hand-held power tool according to Claim 16, **characterized in that** the, in particular wedge-shaped, run-on ramp (122, 150) is configured to axially move a position fixing element (96) in order to activate and deactivate an impact drilling mode.

18. Hand-held power tool according to Claim 16 or 17, **characterized in that** the, in particular wedge-shaped, run-on ramp (122, 150) transitions into an associated plane surface (152) and the plane surface (152) extends in a manner parallel to and spaced apart from the side (148) facing away from the gear (20) .

## Revendications

1. Machine-outil portative (10), notamment visseuse ou perceuse-visseuse, comprenant une transmission (20) agencée dans un boîtier de transmission (24, 206) pour l'entraînement d'une broche de sortie (42), et comprenant un embrayage à couple (40, 200) associé à la broche de sortie (42), un élément de transfert (58) déplaçable axialement en direction d'un axe médian longitudinal (46) de la broche de sortie (42) étant prévu, un élément de blocage (60, 202) immobile axialement en direction de l'axe médian longitudinal (46) et mobile dans un plan (64) agencé transversalement à l'axe médian longitudinal (46) étant prévu pour l'activation et la désactivation de l'embrayage à couple (40, 200), lequel est configuré pour libérer, dans au moins une première position de fonctionnement, un possibilité de déplacement axial de l'élément de transfert (58) en direction de l'axe médian longitudinal (46) pour l'activation de l'embrayage à couple (40, 200), et pour au moins limiter, dans au moins une deuxième position de fonctionnement, la possibilité de déplacement axial de l'élément de transfert (58) pour la désactivation de l'embrayage à couple (40, 200), la broche de sortie (42) étant, dans la deuxième position de fonctionnement de l'élément de blocage (60, 202), au moins essentiellement immobile axialement en direction de l'axe médian longitudinal (46) par rapport au boîtier de transmission (24, 206), au moins un élément d'appui (100) étant formé côté frontal sur l'élément de blocage (60, 202), lequel est orienté en direction de l'élément de transfert (58), **caractérisée en ce que** le boîtier de transmission (24, 206) présente au moins par sections une rainure (110) comprenant au moins une nervure d'appui (112) sur sa périphérie extérieure pour la réception de l'élément de blocage (60, 202).

2. Machine-outil portative selon la revendication 1, **caractérisée en ce que** l'élément de blocage (60, 202) est configuré pour au moins limiter, dans au moins une troisième position de fonctionnement, la possibilité de déplacement axial de l'élément de transfert (58) pour la désactivation de l'embrayage à couple (40, 200), la broche de sortie (42) étant mobile axialement en direction de l'axe médian longitudinal (46) par rapport au boîtier de transmission (24, 206) dans la troisième position de fonctionnement de l'élément de blocage (60, 202) .

3. Machine-outil portative selon la revendication 2, **caractérisée en ce que** la première position de fonctionnement est associée à un mode de vissage, la deuxième position de fonctionnement est associée à un mode de perçage et la troisième position de fonctionnement est associée à un mode de perçage à percussion.

4. Machine-outil portative selon l'une quelconque des revendications précédentes, **caractérisée en ce que** l'élément de blocage (60) est une bague de blocage (62) pouvant tourner autour de l'axe médian longitudinal (46) .

5. Machine-outil portative selon la revendication 4, **caractérisée en ce que** la bague de blocage (62) est reçue dans un élément de réglage associé (66) de manière immobilisée en rotation.

6. Machine-outil portative selon l'une quelconque des revendications précédentes, **caractérisée en ce que** la transmission (20) est configurée à la manière d'un engrenage planétaire (22), au moins un ergot d'enclenchement (84) étant formé sur une couronne (54) d'un étage de transmission (56) de l'engrenage planétaire (22) tourné vers l'embrayage à couple (40, 200) .

7. Machine-outil portative selon la revendication 6, **caractérisée en ce qu'**entre la couronne (54) et un côté (80) de l'élément de transfert (58) tourné vers la couronne (54) est agencé au moins un corps d'enclenchement (82) et l'élément de transfert (58) est précontraint axialement contre la couronne (54) au moyen d'au moins un ressort de pression (86), l'au moins un ressort de pression (86) s'appliquant contre un côté (88) de l'élément de transfert (58) détourné de la transmission (20) et s'appuyant sur un support de ressort associé (92).

8. Machine-outil portative selon la revendication 7, **caractérisée en ce qu'**une position axiale du support de ressort (92) peut être réglée au moyen d'une bague de réglage (48) pouvant tourner autour de l'axe médian longitudinal (46) de la broche de sortie (42) pour l'adaptation d'une précontrainte axiale de l'au moins un ressort de pression (86).

9. Machine-outil portative selon l'une quelconque des revendications précédentes, **caractérisée en ce que** l'élément de transfert (58) présente au moins un évidement (102).

10. Machine-outil portative selon l'une quelconque des revendications précédentes, **caractérisée en ce que** l'élément de blocage (60) présente au moins un prolongement (116) dirigé vers l'extérieur.

11. Machine-outil portative selon les revendications 5 et 10, **caractérisée en ce que** l'au moins un prolongement (116) est dirigé radialement vers l'extérieur et permet la liaison de l'élément de blocage (60) à l'élément de réglage (66).

12. Machine-outil portative selon l'une quelconque des revendications précédentes, **caractérisée en ce que** l'élément de blocage (60, 202) s'applique au moins partiellement contre la nervure d'appui (112), la nervure d'appui (112) étant configurée pour absorber les forces axiales introduites par l'élément de blocage (60, 202) .

13. Machine-outil portative selon l'une quelconque des revendications 7 à 12, **caractérisée en ce que**, lorsque l'embrayage à couple est désactivé, l'élément d'appui (100) de l'élément de blocage (60, 202) limite une course axiale (106) du corps d'enclenchement (82) et de l'élément de transfert (58) dans une direction détournée de la transmission (20), de telle sorte que le corps d'enclenchement (82) s'applique au moins par zones contre l'ergot d'enclenchement (84) de la couronne (54) pour la désactivation de l'embrayage à couple (40, 200).

14. Machine-outil portative selon l'une quelconque des revendications 8 à 13, **caractérisée en ce que**, lorsque l'embrayage à couple (40, 200) est activé, l'élément d'appui (100) sur l'élément de blocage (60, 202) s'enfonce au moins par zones dans l'évidement (102) de l'élément de transfert (58), de telle sorte que le corps d'enclenchement (82) franchit l'ergot d'enclenchement (84) lors du dépassement d'un couple préréglé.

15. Machine-outil portative selon l'une quelconque des revendications précédentes, **caractérisée en ce que** l'élément de blocage (60, 202) peut être assujetti directement ou indirectement lorsque l'embrayage à couple (40, 200) est activé.

16. Machine-outil portative selon l'une quelconque des revendications précédentes, **caractérisée en ce que** l'élément de blocage (60, 202) présente au moins une rampe d'attaque (122, 150), notamment en forme de coin, sur un côté (148) détourné de la transmission (20).

17. Machine-outil portative selon la revendication 16, **caractérisée en ce que** la rampe d'attaque (122, 150), notamment en forme de coin, est configurée pour déplacer axialement un élément de fixation de position (96) pour l'activation et la désactivation d'un mode de perçage à percussion.

18. Machine-outil portative selon la revendication 16 ou 17, **caractérisée en ce que** la rampe d'attaque (122, 150), notamment en forme de coin, se transforme en une surface plane associée (152) et la surface plane (152) s'étend parallèlement à distance par rapport au côté (148) détourné de la transmission (20).
